**Europäisches Patentamt**

**European Patent Office**

**Office européen des brevets**

(11) Veröffentlichungsnummer: **0 449 069 A1**

# (12) EUROPÄISCHE PATENTANMELDUNG

(21) Anmeldenummer: **91104110.1**

(51) Int. Cl.5: **F16B 7/04, E04B 1/58**

(22) Anmeldetag: **16.03.91**

(30) Priorität: **24.03.90 DE 4009539**

(43) Veröffentlichungstag der Anmeldung:
**02.10.91 Patentblatt 91/40**

(84) Benannte Vertragsstaaten:
**AT BE CH DE DK ES FR GB GR IT LI LU NL SE**

(71) Anmelder: **Langer geb. Layher, Ruth**
**Im Weinberg 13**
**W-7129 Güglingen(DE)**

(72) Erfinder: **Langer geb. Layher, Ruth**
**Im Weinberg 13**
**W-7129 Güglingen(DE)**

(74) Vertreter: **Utermann, Gerd, Dipl.-Ing.**
**Kilianstrasse 7 (Kilianspassage) Postfach**
**3525**
**W-7100 Heilbronn(DE)**

(54) Vorrichtung zum Verbinden von fluchtend aneinander anschliessenden Rohrenden.

(57) Der Zentrierbolzen (10) hat in der Mitte eine Halteverdickung (25) und zwei Zapfen (18.1, 18.2), die Längsrippen (30) und dazwischen liegende Längsvertiefungen (31) sowie Quervertiefungen (37.1; 37.2) aufweisen.

Fig.2

EP 0 449 069 A1

Die Erfindung betrifft eine Vorrichtung zum Verbinden von fluchtend aneinander anschließenden Rohrenden mit einem mit Zapfen in die Rohrenden passend eingreifenden Zentrierbolzen, der im wesentlichen in der Mitte eine Halteverdickung aufweist, deren Außendurchmesser größer als der Innendurchmesser der Rohre ist.

Zur Verbindung von Rohren, die miteinander fluchtend verwendet werden sollen, sind Zentrierbolzen mit einsteckbaren Zapfen üblich. Diese haben Halteverdickungen, damit sie nicht in die Rohrenden fallen. In der Regel werden solche Zentrierbolzen mit ihren Zapfen aus vollwandigem Material gebildet, wie es beispielsweise in US-PS 2,295,311, Fig. 3 dargestellt ist. Solche Zentrierbolzen sind schwer und ihre Zapfen klemmen unter Umständen beim Ein- und Ausbau. Außerdem können sie Lufteintritt und Flüssigkeits- und Feuchtigkeitsaustausch behindern. Ähnliche Zentrierbolzen sind auch schon vielfältig im praktischen Einsatz benutzt worden.

Eine besonders wichtige Anwendung ist das Einbringen von sehr langen, Zugkräfte aufnehmenden Elementen in größeren Gerüstanlagen, die die beiden äußeren Enden der unteren Bereiche von Gerüsten gegen das Auseinanderziehen sichern. Dabei müssen lange Rohre mit gleich langen oder kürzeren Rohren auf Stoß gut Zugkräfte übertragend verbunden werden. Dafür ist eine gute Zentrierung und auch biegefeste Verbindung der Rohre wichtig. Außerdem dürfen die Rohre und Bauteile nicht zu schwer werden. Die Zapfen müssen sicher eingesteckt werden und es muß erreicht werden, daß die Bauteile sich nicht miteinander durch Korrosion so fest verbinden, daß sie nur schlecht demontiert werden können.

Der Erfindung liegt die Aufgabe zugrunde, einen in der Konfiguraton günstiger gestalteten Zentrierbolzen ggf. mit zugehörigen Kupplungsteilen zu vorzuschlagen.

Erfindungsgemäß ist vorgesehen, daß die beiderseits der Verdickung liegenden Zapfen als Profilteile ausgebildet sind, welche über den Umfang und die Länge verteilt Anlageflächen und dazwischen gebildete Vertiefungen aufweisen.

Durch die Profilierungen und Vertiefungen, deren Einzelheiten auch in den weiteren Ansprüchen und dem nachfolgenden, anhand der Zeichnungen abgehandelten Beschreibungteil erläutert sind, wird einerseits eine beträchtliche Gewichtseinsparung und andererseits ein sinnvolles, nur bereichsweise Tragen der Zentierzapfen-Wände erreicht, so daß Ein- und Ausschieben leicht sind, feuchte Luft, Schmutz, Sand, Putzreste, Farbreste und dgl. den langfristigen, leichten Gebrauch nicht beeinträchtigen.

Weitere Einzelheiten, Vorteile, Merkmale und Gesichtspunkte der Erfindung sind auch in den weiteren Ansprüchen und dem nachfolgenden, anhand der Zeichnungen abgefaßten Beschreibungsteil behandelt.

Ein Ausführungsbeispiel der Erfindung wird nachfolgend anhand der Zeichnungen erläutert.

Es zeigen:

Fig. 1    Ein Schrägbild einer Stoßverbindung, bei der der Zentrierbolzen innenliegend gestrichelt dargestellt ist;

Fig. 2    die Seitenansicht eines Zentrierbolzens und

Fig. 3    die Draufsicht auf das Ende des Zentrierbolzens.

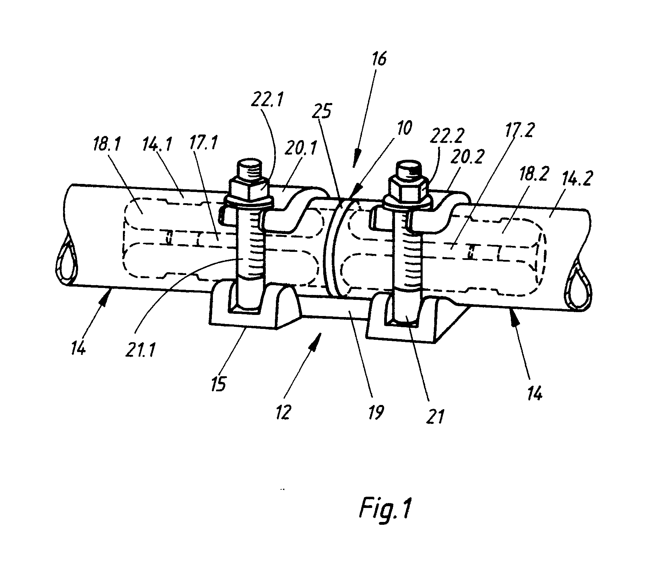

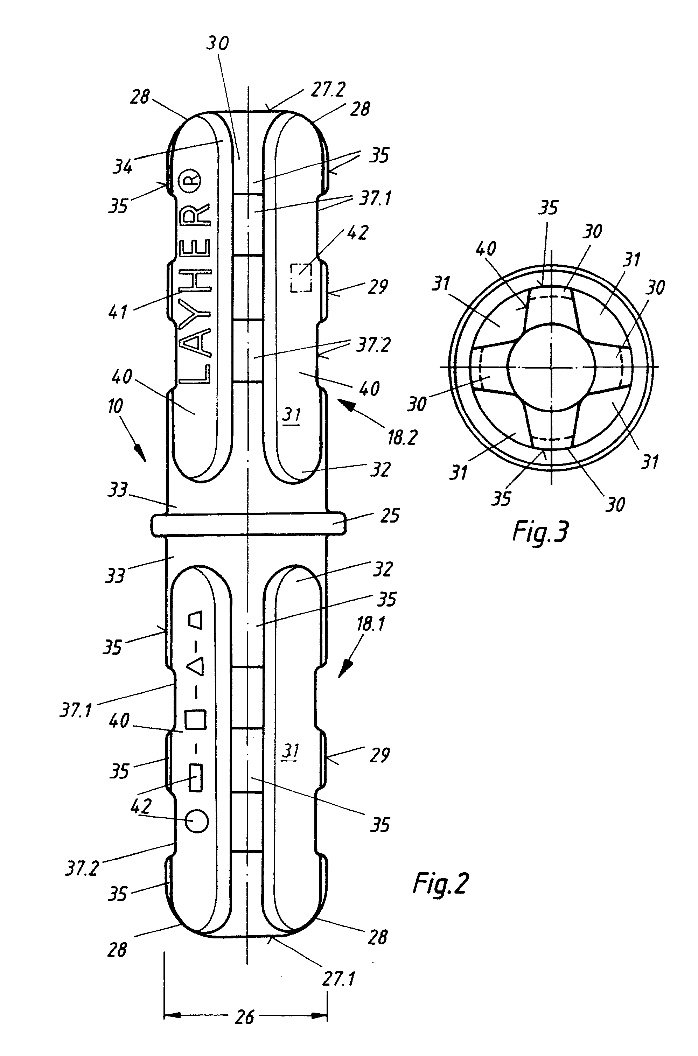

Die Fig. 1 zeigt eine Kupplung 12, die die beiden Enden 14.1 und 14.2 zweier Rohre 14 miteinander biegefest verbindet. Dabei ist ein innenliegender Zentrierbolzen 10 gestrichelt dargestellt. Er ist deutlicher in den Fig. 2 und 3 dargestellt. Ein Verbindungsschalenelement 15 bekannter Bauart reicht beiderseits der Stoßstelle 16 bis etwa zur Mitte 17.1 bzw. 17.2 der beiden an dem Zentrierbolzen 10 ausgebildeten Zapfen 18.1 und 18.2. Es ist halbschalenförmig ausgebildet und hat einen unteren Schalensteg 19 sowie gelenkig angebrachte Halbschalen 20.1 und 20.2, die mit Hilfe von schwenkbar an dem Verbindungsschalenelement 15 angebrachten Schraubbolzen 21.1 und 21.2 auf den Rohrenden 14.1 und 14.2 mittels der Muttern 22.1 und 22.2 in bekannter Weise festgespannt werden. Dadurch ergibt sich eine zugfeste Verbindung der beiden Rohrenden 14.1 und 14.2, deren Biegesteifigkeit durch den stabilen Zentrierbolzen 10 gegeben ist, weil dessen Zapfen 18.1; 18.2 passend in den Rohrenden 14.1, 14.2 sitzen. Damit der Zentrierbolzen 10 bei der Montage nicht unbeabsichtigt in eines der Rohre ganz hineinangelangt, hat er in der Mitte eine Halteverdickung 25 bekannter Ausbildung, die im Durchmesser größer als die Innendurchmesser der Rohre bzw. der Außendurchmesser 26 der Zapfen 18.1; 18.2 ist und etwa dem Außendurchmesser der Rohre entspricht.

Das ganze Bauteil eines Zentrierbolzens 10 kann als Schmiedeteil, als Formgußteil oder dgl. aus allen in Betracht kommenden Werkstoffen, insbesondere Stahl, Stahlguß, Leichtmetall oder ggf. verstärkten Kunststoffen hergestellt sein.

Die beiden Zapfen 18.1; 18.2 haben ebene Stirnflächen 27.1 und 27.2, die mit Einführungsrundungen 28 in die Seitenwandflächen 29 übergeben. Die tragenden Seitenwandflächen 29 sind als Zylinderteilflächen ausgebildet, die einen Durchmesser haben, der abzüglich eines Einführspieles dem Innendurchmesser der Rohre gleich ist.

Bei dem bevorzugten Ausführungsbeispiel sind beide Zapfen 18.1; 18.2 in ihrer Konfiguration bis auf die Beschriftung gleich ausgebildet. Jeder Zapfen 18.1; 18.2 ist von vier Rippen 30 begrenzt, die sich in Längsrichtung der Zapfen und des gesamten Zentrierbolzens erstrecken. Zwischen ihnen sind sich längs erstreckende Längsvertiefungen 31 gebildet, die mit Ausrundungen 32 in den Zylinderflächen-Mittelteil 33 jedes Zapfens übergehen und die im Bereich der Enden ebenfalls mit Rundungen 34 auslaufen. Sie haben eine etwa dreieckförmige Profilgestalt, wie es aus Fig. 3 hervorgeht. Sie können auch als Teilzylinder oder nach anderen Kurven geformt sein. Sie begrenzen damit die äußeren Rippen-Tragflächen 35, die im wesentlichen zylindrische Außenkontur aufweisen. Diese Rippen-Tragflächen 35 bilden die Anlageflächen der Zapfen an den Innenflächen der Rohre 14. In den Rippen-Tragflächen 35 sind bei diesem Ausführungsbeispiel in jeder Rippe 30 zwei Quervertiefungen 37.1 und 37.2 ausgebildet, die im Gegensatz zu den Längsvertiefungen 31 nur eine geringe Tiefe von etwa 2 bis 3 mm aufweisen, während bei einem Rohrinnendurchmesser von 40,2 mm die Längsvertiefungen 31 in der Mitte eine radiale Tiefe von etwa 8 bis 10 mm aufweisen.

So ergeben sich Zapfenausbildungen, die auf den Rippen 30 jeweils drei Rippen-Tragflächen 35, insgesamt bei vier Rippen, also zwölf tragende Flächen aufweisen, die in den Mittelbereichen jeweils eine Ringfläche haben. Durch diese große Zahl relativ großflächig gestalteter tragender Flächen kann der Zapfen alle Führungs- und Biegekräfte einwandfrei auf die Rohrwand übertragen. Trotzdem können in den Hohlräumen Schmutz, Wasser und Gasaustausch Platz finden.

Die bei solchen Zentrierbolzen zur Kennzeichnung ihrer Herkunft und Verwendung erforderlichen Beschriftungen können mit Vorzug - wie dargestellt - auf den Innenflächen 40 der Längsvertiefungen 31 als erhabene oder vertiefte Schrift 41, 42 nach den jeweiligen Bedürfnissen und mit dem jeweiligen Inhalt angebracht werden. Die verschiedenen Beschriftungen können auf die Zapfen verteilt und/oder auf mehreren Flächen ausgebildet werden.

Der Zentrierbolzen ist leichter als herkömmliche, kann gut hergestellt, gelagert, transportiert, ein- und ausgebaut werden und übernimmt die Funktion der Zentrierung bei der Montage und die einwandfreie Überleitung der Biegekräfte im Belastungsfall, so daß auch sehr große Längen von aneinander gereihten Rohren mit den dargestellten Zentrierbolzen und Kupplungen hergestellt werden können, die es gestatten, Zugkräfte und Biegekräfte aufzunehmen und zu übertragen.

Die nachfolgend abgedruckte Zusammenfassung ist Bestandteil der Offenbarung der Erfindung:

Der Zentrierbolzen (10) hat in der Mitte eine Halteverdickung (25) und zwei Zapfen (18.1, 18.2), die Längsrippen (30) und dazwischen liegende Längsvertiefungen (31) sowie Quervertiefungen (37.1; 37.2) aufweisen.

Bezugszeichenliste:

| 10 | Zentrierbolzen |
| 12 | Kupplung |
| 14 | Rohr |
| 14.1 | Ende/Rohrende |
| 14.2 | " |
| 15 | Verbindungsschalenelement |
| 16 | Stoßstelle |
| 17.1 | Mitte |
| 17.2 | " |
| 18.1 | Zapfen |
| 18.2 | " |
| 19 | unterer Schalensteg |
| 20.1 | Halbschale |
| 20.2 | " |
| 21.1 | Schraubbolzen |
| 21.2 | " |
| 22.1 | Mutter |
| 22.2 | " |
| 25 | Halteverdickung |
| 26 | Außendurchmesser von 18.1/18.2 |
| 27.1 | Stirnfläche |
| 27.2 | " |
| 28 | Einführungsrundung |
| 29 | Seitenwandfläche |
| 30 | Rippe |
| 31 | Längsvertiefung |
| 32 | Ausrundung |
| 33 | Zylinderflächen-Mittelteil |
| 34 | Rundung |
| 35 | Rippen-Tragfläche |
| 37.1 | Quervertiefung |
| 37.2 | " |
| 40 | Innenfläche von 31 |
| 41 | Schrift |
| 42 | " |

**Patentansprüche**

1. Vorrichtung zum Verbinden von fluchtend aneinander anschließenden Rohrenden (14.1; 14.2) mit einem mit Zapfen (18.1; 18.2) in die Rohrenden passend eingreifenden Zentrierbolzen (10), der im wesentlichen in der Mitte eine Halteverdickung (25) aufweist, deren Außendurchmesser größer als der Innendurchmesser der Rohre ist,
**dadurch gekennzeichnet,**
daß die beiderseits der Halteverdickung (25) liegenden Zapfen (18.1; 18.2) als Profilteile ausgebildet sind, welche über den Umfang und die Länge verteilt Anlageflächen (35) und dazwischen gebildete Vertiefungen (31; 37.1, 37.2) aufweisen.

2. Vorrichtung nach wenigstens einem der übrigen Ansprüche,
**dadurch gekennzeichnet,**
daß mindestens drei die Zapfen-Außenfläche (29) begrenzende Längsrippen (30) gebildet sind, zwischen denen sich längserstreckende Vertiefungen (31) gebildet haben.

3. Vorrichtung nach wenigstens einem der übrigen Ansprüche,
**dadurch gekennzeichnet,**
daß die Oberflächen der Rippen (30) auf Zylinderflächen (29) liegen.

4. Vorrichtung nach wenigstens einem der übrigen Ansprüche,
**dadurch gekennzeichnet,**
daß die Rippen (30) in Längsrichtung jeweils zwei Quervertiefungen (37.1; 37.2) aufweisen.

5. Vorrichtung nach wenigstens einem der übrigen Ansprüche,
**dadurch gekennzeichnet,**
daß die Rippen (30) an ihren Enden (28) gerundet sind.

6. Vorrichtung nach wenigstens einem der übrigen Ansprüche,
**dadurch gekennzeichnet,**
daß in den Oberflächen (40), der zwischen den Rippen (30) gebildeten Vertiefungen erhabene und/oder vertiefte Hinweiszeichen (41, 42) ausgebildet sind.

7. Vorrichtung nach wenigstens einem der übrigen Ansprüche,
**dadurch gekennzeichnet,**
daß die Rohrenden (14.1, 14.2) zwischen einem Zugkräfte übertragenden, auf den Rohraußendurchmesser abgestimmten, wenigstens die Mitte (17.1; 17.2) jedes Zapfens (18.1; 18.2) übergreifenden Verbindungsschalenelementes (15) ausgestattet sind, welches jenseits des Stoßes (16) auf jeder Seite eine Halbschale (20.1; 20.2) und eine Spanneinrichtung (21.1, 21.2; 22.1, 22.2) zur zugfesten Verbindung der Rohre (14) unter Zentrierung mit dem Zentrierbolzen (10) vorgesehen sind.

Fig.1

5

Fig.2

Fig.3

**Europäisches Patentamt**

# EUROPÄISCHER RECHERCHENBERICHT

Nummer der Anmeldung

**EP 91 10 4110**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 084 276   (STAFF AND SCHWARZ GMBH) <br> * Seite 2, Zeile 27 - Seite 4, Zeile 13; Figuren 2-4 * <br> — — — | 1-3,5,6 | F 16 B 7/04 <br> E 04 B 1/58 |
| X | FR-A-2 289 702   (MAG) <br> * das ganze Dokument * <br> — — — | 1-3 | |
| A | US-A-3 004 784   (M.M.SELBY) <br> * Spalte 2, Zeile 50 - Spalte 4, Zeile 40; Figuren 4, 5 * <br> — — — | 1 | |
| A | US-A-1 638 230   (A.ALSAKER) <br> * Figuren 3, 6 * <br> — — — | 7 | |
| D,A | US-A-2 295 311   (R.A.UECKER ET AL) <br> — — — — — | 1 | |

| | | | RECHERCHIERTE SACHGEBIETE (Int. Cl.5) |
|---|---|---|---|
| | | | F 16 B <br> E 04 B |

Der vorliegende Recherchenbericht wurde für alle Patentansprüche erstellt

| Recherchenort | Abschlußdatum der Recherche | Prüfer |
|---|---|---|
| Den Haag | 17 Juni 91 | ARESO Y SALINAS J. |